# EUROPEAN PATENT SPECIFICATION

(11) **EP 3 772 452 B1**
(45) Date of publication and mention of the grant of the patent: **21.02.2024**
(21) Application number: 20188373.3
(22) Date of filing: 29.07.2020
(51) Int. Cl.: B62M 6/50, B62M 6/55, G01L 1/04, G01L 1/12, G01L 3/14, G01L 3/10, B62J 45/411, B62J 45/421

(54) **PEDALING SENSING DEVICE OF ELECTRIC BICYCLE**
TRETMESSVORRICHTUNG EINES ELEKTRISCHEN FAHRRADS
DISPOSITIF DE DÉTECTION DE PÉDALAGE DE BICYCLETTE ÉLECTRIQUE

(30) Priority: 06.08.2019 TW 108210360 U
(43) Date of publication of application: 10.02.2021
(73) Proprietor: Unique Product & Design Co., Ltd., Tainan City 710 (TW)
(72) Inventor: CHENG, Chih-Ching, 710 Tainan City (TW)
(74) Representative: Stöckeler, Ferdinand

(56) References cited:
- CN-A- 108 639 225
- CN-U- 206 049 955
- CN-U- 206 691 312
- JP-A- 2000 142 545

## Description

### BACKGROUND

### Technology Field

This disclosure relates to a sensing device and, in particular, to a pedaling sensing device of an electric bicycle with an electric powering function that can transfer the force applied to the crank axle into a sensing signal.

### Description of Related Art

Bicycles are commonly used by people as a means of travel. Since riding bicycles can achieve exercise effects and save energy, more and more people like to go out by bicycle. However, when riding on a hill or mountain or riding for a long distance, the rider may not enjoy the riding trip. Besides, the older riders may easily feel tired when riding bicycles. Therefore, in order to make people ride more smoothly and easier, an electric bicycle (also known as an e-bike) is provided on the market. The electric bicycle is a bicycle with an integrated electric motor, which can be used for propulsion, to assist the rider's pedal-power, thereby making the riders easier and more power saving. In general, the electric bicycle comprises a pedaling sensing device for detecting the rider's pedaling force and then driving the motor to generate the assisting power as the pedaling force is detected. CN 206 049 955U discloses an electric power assisting bicycle and a built-in motor drive system. CN 206 691 312 U discloses an electric bicycle and input actuating system. Said CN 206 691 312 U discloses a pedaling sensing device according to the preambles of claims 1 and 9.

Therefore, for the sake of the large requirements for electric bicycles, a novel pedaling sensing device of an electric bicycle is provided that can correctly sense the user's pedaling force for driving the motor to operate.

### SUMMARY

In view of the foregoing, an objective of this disclosure is to provide a pedaling sensing device of an electric bicycle having a novel structure and a good sensing effect.

This disclosure provides a pedaling sensing device of an electric bicycle, which is configured to connect to a motor of the electric bicycle, and comprises a crank axle, a first gearwheel, a second gearwheel, a sensing unit, an assisting unit, and a chain wheel. The scope of protection is defined by the appended claims.

### BRIEF DESCRIPTION OF THE DRAWINGS

The disclosure will become more fully understood from the detailed description and accompanying drawings, which are given for illustration only, and thus are not limitative of the present disclosure, and wherein:
FIG. 1 is an exploded perspective view of a pedaling sensing device of an electric bicycle according to a first embodiment of this disclosure;
FIG. 2 is an exploded perspective view of parts of the first embodiment;
FIG. 3 is a sectional view of an assembled pedaling sensing device of the first embodiment;
FIG. 4 is an exploded perspective view of a pedaling sensing device of an electric bicycle according to a second embodiment of this disclosure;
FIG. 5 is a sectional view of an assembled pedaling sensing device of the second embodiment;
FIG. 6 is an enlarged sectional view of a part of FIG. 5; and
FIG. 7 is a sectional view similar to FIG. 6, wherein the first gearwheel of the second embodiment moves rightward from the position as shown in FIGS. 5 and 6.

### DETAILED DESCRIPTION OF THE DISCLOSURE

The present disclosure will be apparent from the following detailed description, which proceeds with reference to the accompanying drawings, wherein the same references relate to the same elements.

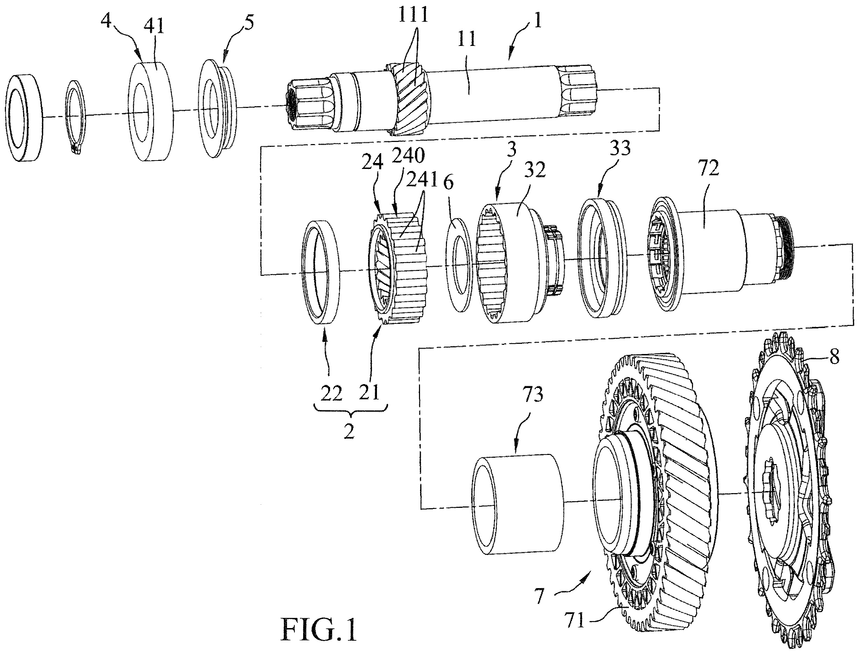

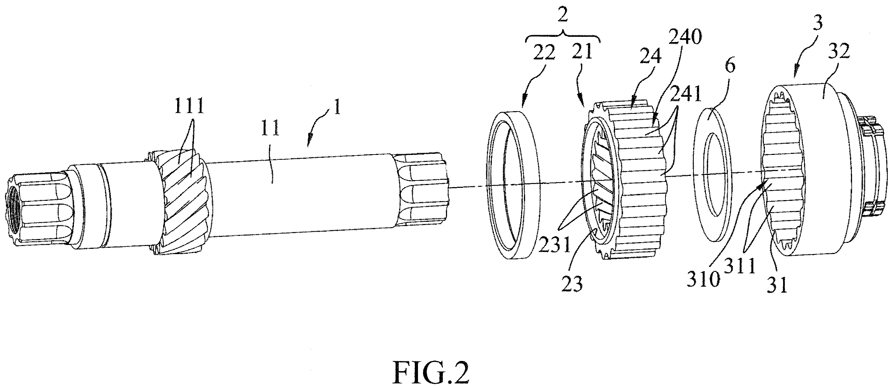

Referring to FIGS. 1 to 3, in a first embodiment of this disclosure, a pedaling sensing device of an electric bicycle, which is configured to connect to a motor 10 of the electric bicycle, comprises a crank axle 1, a first gearwheel 2, a second gearwheel 3, a sensing unit 4, a thrust bearing 5, an elastic element 6, an assisting unit 7, and a chain wheel 8.

The crank axle 1 extends along an axial direction A and comprises an outer surface 11. A plurality of first bevel teeth 111 are disposed annularly around the outer surface 11. Each end of the crank axle 1 is connected to a crank (not shown), and the crank is further connected to a pedal (not shown).

In this embodiment, the first gearwheel 2 is composed of two portions including a main body portion 21 and a ring portion 22 disposed at one end of the main body portion 21. In practice, the main body portion 21 and the ring portion 22 can be integrated as one piece, or the ring portion 22 can be omitted. The first gearwheel 2 is disposed around the outer surface 11 of the crank axle 1. The first gearwheel 2 comprises a first inner annulus surface 23 and a first outer annulus surface 24. The first inner annulus surface 23 has an annular shape and is disposed toward the outer surface 11 of the crank axle 1. The first outer annulus surface 24 is located opposite to the first inner annulus surface 23. The first inner annulus surface 23 is formed with a plurality of second bevel teeth 231 for engaging with (matching) the first bevel teeth 111. The first outer annulus surface 24 is formed with a first transmission structure 240. The first transmission structure 240 comprises a plurality of first straight teeth 241 disposed around the first outer annulus surface 24 and extending along the axial direction A. Since the second bevel teeth 231 of the first gearwheel are engaged with the first bevel teeth 111 of the crank axle, when the crank axle 1 rotates, the first gearwheel 2 can be carried to rotate, thereby providing a force for generating an axial displacement of the first gearwheel 2. Accordingly, when the first gearwheel 2 is rotated, it can be also moved with respect to the crank axle 1 along the axial direction A.

The second gearwheel 3 is disposed around the first outer annulus surface 24 of the first gearwheel 2. In this embodiment, the second gearwheel 3 comprises a second inner annulus surface 31 and a second outer annulus surface 32. The second inner annulus surface 31 is disposed around the first outer annulus surface 24, and the second outer annulus surface 32 is disposed opposite to the second inner annulus surface 31. The second inner annulus surface 31 is formed with a second transmission structure 310 matching the first transmission structure 240. The second transmission structure 310 comprises a plurality of second straight teeth 311 for engaging with the first straight teeth 241. Accordingly, the first gearwheel 2 can carry the second gearwheel 3 to rotate. At least a bearing 33 is disposed adjacent to the second gearwheel 3 for making the rotation of the second gearwheel smoother.

To be noted, in practice, the first transmission structure 240 and the second transmission structure 310 can be formed with another type of structures such as the bevel teeth or wavy teeth. Accordingly, the first gearwheel 2 can still carry the second gearwheel 3 to rotate.

The sensing unit 4 is installed around the crank axle 1 and located adjacent to the first gearwheel 2, and the sensing unit 4 is signally connected with the motor 10. Specifically, the sensing unit 4 of the first embodiment comprises a pressure sensing element 41 disposed around the crank axle 1 for sensing a pressing force from the first gearwheel 2.

The thrust bearing 5 is disposed around the crank axle 1 and is located between the first gearwheel 2 and the pressure sensing element 41. The elastic element 6 is a disc spring. The elastic element 6 is disposed around the crank axle 1 and is located at one side of the first gearwheel 2 away from the thrust bearing 5. In practice, the elastic element 6 pushes the first gearwheel 2 toward the thrust bearing 5, so that the first gearwheel 2 can apply a predetermined pressing force to the pressure sensing element 41 through the thrust bearing 5.

The assisting unit 7 comprises an assisting gearwheel 71, a connecting base 72 and a one-way bearing 73. The assisting gearwheel 71 is disposed around the crank axle 1, wherein the motor 10 is configured to drive the assisting gearwheel 71 to rotate. The connecting base 72 is disposed around the crank axle 1 and is located between the crank axle 1 and the assisting gearwheel 71. The one-way bearing 73 is disposed around the connecting base 72 and is located between the connecting base 72 and the assisting gearwheel 71. The chain wheel 8 is disposed around the crank axle 1 and is connected to the connecting base 72 of the assisting unit 7.

For example, when the rider pedals forwardly to drive the crank axle 1 to rotate forwardly, the crank axle 1 can carry the engaged first gearwheel 2 and second gearwheel 3 to rotate, and thus carry the connecting base 72 as well as the chain wheel 8 to rotate. Herein, the crank axle 1 is applied with a force, which is a torque transferred from the pedaling of the rider. Accordingly, the propulsion of the electric bicycle can be provided by the pedaling of the rider.

Moreover, when the rider pedals to provide the propulsion of the electric bicycle, the applied force can also drive the crank axle 1 to rotate the first gearwheel 2. Since the second bevel teeth 231 of the first gearwheel 2 are engaged with the first bevel teeth 111 of the crank axle 1, a force along the axial direction A can be applied to the first gearwheel 2, thereby pushing the first gearwheel 2 to move with respect to the crank axle 1 along the axial direction A. To be noted, the movement of the first gearwheel 2 is very small, so it is not shown in the figures. In the first embodiment, the design of the extension directions of the first bevel teeth 111 and the second bevel teeth 231 allows the first gearwheel 2 to move toward the pressure sensing element 41 along the axial direction A. Then, the first gearwheel 2 pushes the thrust bearing 5 so as to generate a pressing force to press the pressure sensing element 41. When the pressing force increases, the pressure sensing element 41 can sense the applied force and then transform the sensed force into an electrical signal, which is then sent to the motor 10 for controlling the motor to operate. Accordingly, the motor 10 can be enabled to drive the assisting gearwheel 71 to rotate. Then, the connecting base 72 can transmit the power of the motor 10 to the chain wheel so as to provide the assisting power to rotate chain wheel.

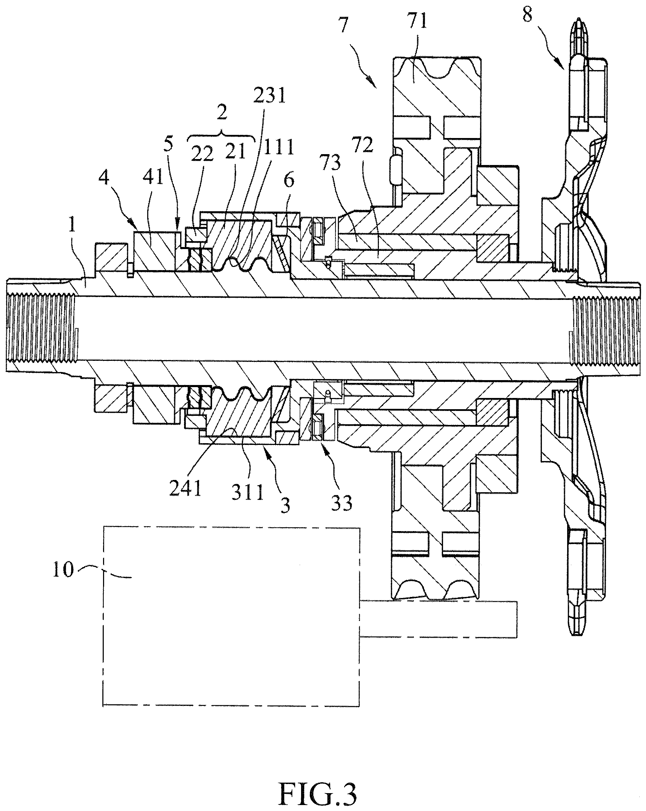

In other words, when the rider pedals to rotate the chain wheel 8, the first gearwheel 2 can also apply a force to the sensing unit 4. Once the sensing unit 4 senses the applied force, it can control the motor 10 to operate for assisting the rotation of the chain wheel, thereby achieving the desired assisting riding effect. Accordingly, the rider can ride the electric bicycle easier. To be noted, when the motor 10 drives the assisting gearwheel 71 to rotate through the one-way bearing 73 of the assisting unit 7, the crank axle 1 is not affected. When the on-way bearing 73 rotates the assisting gearwheel 71, the connecting base 72 and the chain wheel are carried to rotate in one-way. If the rider stops pedaling, the first gearwheel 2 will return to the original position as shown in FIG. 3, and the motor 10 stops operation.

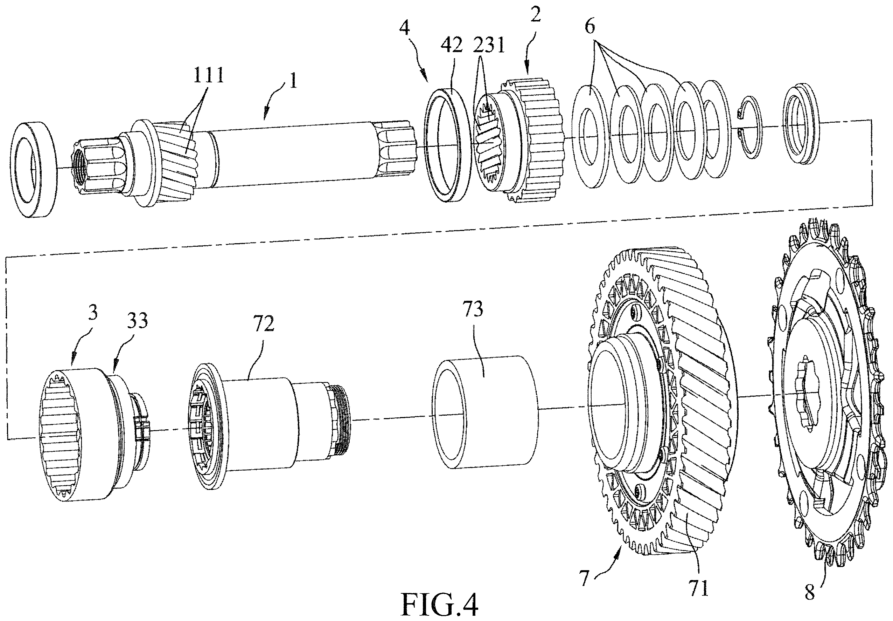

Referring to FIGS. 4 to 6, the structure of the pedaling sensing device of an electric bicycle of a second embodiment of this disclosure is mostly the same as that of the first embodiment. Different from the first embodiment, the extension directions of the first bevel teeth 111 of the crank axle 1 and the second bevel teeth 231 of the first gearwheel 2 are opposite to those of the first embodiment. Accordingly, when the rider pedals forwardly to carry the crank axle 1 to rotate forwardly. That is, when the (pedaling) force is applied to the crank axle 1, the first gearwheel 2 can be driven by the crank axle 1 to rotate and move toward the assisting gearwheel 71 along the axial direction A.

The sensing unit 4 of the second embodiment comprises a magnet 42 disposed on the first gearwheel 2 and two magnetic sensing elements 43. The magnet 42 is correspondingly rotated with the first gearwheel 2, and the magnetic sensing elements 43 are disposed adjacent to the crank axle 1 for sensing a magnetic flux variation. The magnetic sensing elements 43 are signally connected to the motor 10. The first gearwheel 2 is located between the magnetic sensing element 43 and the assisting gearwheel 71.

In the second embodiment, the pedaling sensing device comprises a plurality of elastic elements 6, which are disc springs arranged along the axial direction A and disposed around the crank axle 1. The elastic elements 6 are located between the first gearwheel 2 and the assisting gearwheel 71, and are configured for pushing the first gearwheel 2 toward the magnetic sensing elements 43.

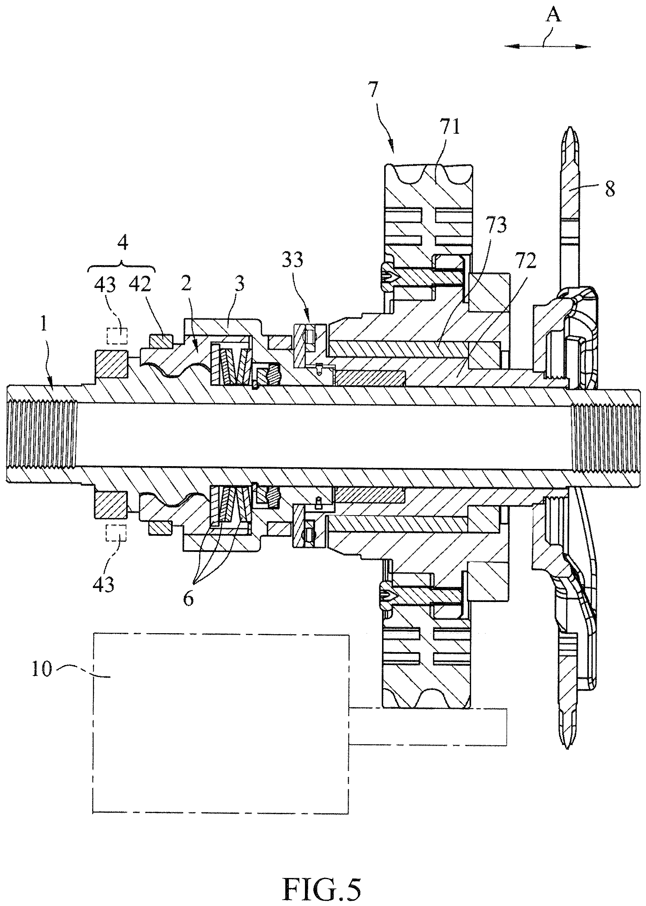

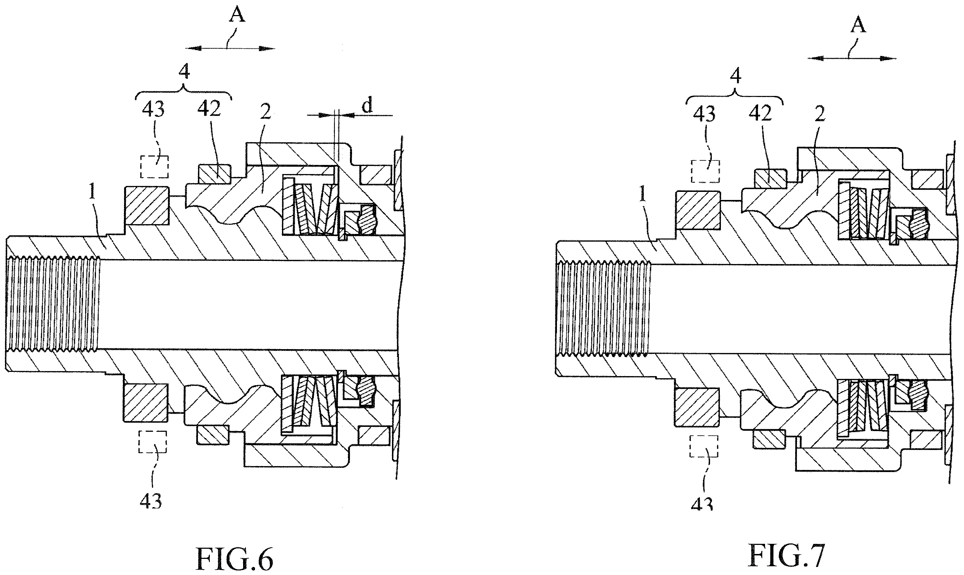

With reference to FIGS. 5, 6 and 7, in the second embodiment, the magnetic sensing element 43 senses the magnetic flux variation caused by the movement of the magnet 42 so as to sense the applied (pedaling) force. Specifically, when the force is provided to rotate the crank axle 1 and the first gearwheel 2 is rotated along with the crank axle 1, the magnet 42 is also rotated and is moved along the axial direction A from the position as shown in FIG. 6. To be noted, the movement of the magnet 42 is very small as shown in FIG. 6 (a distance d). The magnet 42 is moved toward the assisting gearwheel 71 to reach the position as shown in FIG. 7, so the magnetic sensing element 43 can sense the magnetic flux variation so as to determine that the force is applied. Then, the magnetic sensing element 43 controls to enable the motor 10 for outputting a power to assist the rotation of the assisting gearwheel 71 and the chain wheel 8, thereby achieving the assisting riding effect. If the rider stops pedaling, the first gearwheel 2 will return to the original position as shown in FIG. 6, and the motor 10 stops operation.

As mentioned above, the first bevel teeth 111 of the crank axle 1 match the second bevel teeth 231 of the first gearwheel 2, and the first transmission structure 240 of the first gearwheel 2 matches the second transmission structure 310 of the second gearwheel 3. Accordingly, when the force is applied to rotate the crank axle 1, the first gearwheel 2 is carried to rotate and is moved along the axial direction A, so that the sensing unit 4 can sense the applied force and then control the motor 10 to provide the assisting power. This disclosure provides a novel structure, and the sensing unit 4 has a good sensing ability, thereby achieving the effect of easy riding.

Although the disclosure has been described with reference to specific embodiments, this description is not meant to be construed in a limiting sense. Various modifications of the disclosed embodiments, as well as alternative embodiments, will be apparent to persons skilled in the art. It is, therefore, contemplated that the invention will cover all modifications that fall within the scope of the appended claims.

## Claims

1. A pedaling sensing device of an electric bicycle, which is configured to signally connect to a motor (10) of the electric bicycle, comprising:
a crank axle (1) extending along an axial direction (A) and comprising an outer surface (11), wherein a plurality of first bevel teeth (111) are disposed around the outer surface (11);
a first gearwheel (2) disposed around the outer surface (11) of the crank axle (1) and comprising a first inner annulus surface (23) and a first outer annulus surface (24), wherein the first inner annulus surface (23) is formed with a plurality of second bevel teeth (231) matching the first bevel teeth (111), and the first outer annulus surface (24) is formed with a first transmission structure (240);
a sensing unit (4) disposed around the crank axle (1) and located adjacent to the first gearwheel (2), wherein the sensing unit (4) is configured to signally connect with the motor (10);
an assisting unit (7) comprising an assisting gearwheel (71) disposed around the crank axle (1), wherein the motor (10) is configured to drive the assisting gearwheel (71) to rotate; and
a chain wheel (8) disposed around the crank axle (1) and connected to the assisting unit (7);
the pedaling sensing device further comprising:
a second gearwheel (3) disposed around the first outer annulus surface (24) of the first gearwheel (2), wherein the second gearwheel (3) comprises a second inner annulus surface (31) disposed around the first outer annulus surface (24), and the second inner annulus surface (31) is formed with a second transmission structure (310) matching the first transmission structure (240); wherein when a force is applied to rotate the crank axle (1), the first gearwheel (2), the second gearwheel (3) and the chain wheel (8) are carried to rotate, the first gearwheel (2) also moves with respect to the crank axle (1) along the axial direction (A) while rotating, such that the sensing unit (4) senses the applied force so as to control the motor (10) to drive the assisting gearwheel (71) to rotate, and the assisting unit (7) transmits an assisting power from the motor (10) to the chain wheel (8) for assisting to rotate the chain wheel (8), wherein
the sensing unit (4) further comprises a pressure sensing element (41) disposed around the crank axle (1), and the first gearwheel (2) moves toward the pressure sensing element (41) as the first gearwheel (2) rotates along with the crank axle (1), thereby increasing a pressing force applied to the pressure sensing element (41), so that the sensing unit (4) senses the applied force;
the pedaling sensing device further comprising a thrust bearing (5) disposed around the crank axle (1), wherein the thrust bearing (5) is located between the first gearwheel (2) and the pressure sensing element (41);
the pedaling sensing device further comprising an elastic element disposed around the crank axle,
**characterized in that**
the elastic element (6) is located at one side of the first gearwheel (2) away from the thrust bearing (5), and the elastic element (6) pushes the first gearwheel (2) toward the thrust bearing (5).

2. The pedaling sensing device according to claim 1, wherein the assisting unit (7) further comprises a connecting base (72) disposed around the crank axle (1), the connecting base (72) is located between the crank axle (1) and the assisting gearwheel (71) and connected to the chain wheel (8), and the connecting base (72) carries the chain wheel (8) to rotate as the assisting gearwheel (71) rotates.

3. The pedaling sensing device according to claim 2, wherein the assisting unit (7) further comprises a one-way bearing (73) disposed around the connecting base (72), the one-way bearing (73) is located between the connecting base (72) and the assisting gearwheel (71), and the one-way bearing (73) drives the assisting gearwheel (71) to rotate so as to carry the connecting base (72) to rotate in one way.

4. The pedaling sensing device according to claim 1, wherein the elastic element (6) is a disc spring.

5. The pedaling sensing device according to claim 1, wherein at least one bearing (33) is disposed adjacent to the second gearwheel (3).

6. The pedaling sensing device according to claim 1, wherein the first transmission structure (240) comprises a plurality of straight teeth (241).

7. The pedaling sensing device according to claim 1, wherein the first transmission structure (240) comprises a plurality of bevel teeth.

8. The pedaling sensing device according to claim 1, wherein the first transmission structure (240) comprises a plurality of wavy teeth.

9. A pedaling sensing device of an electric bicycle, which is configured to signally connect to a motor (10) of the electric bicycle, comprising:
a crank axle (1) extending along an axial direction (A) and comprising an outer surface (11), wherein a plurality of first bevel teeth (111) are disposed around the outer surface (11);
a first gearwheel (2) disposed around the outer surface (11) of the crank axle (1) and comprising a first inner annulus surface (23) and a first outer annulus surface (24), wherein the first inner annulus surface (23) is formed with a plurality of second bevel teeth (231) matching the first bevel teeth (111), and the first outer annulus surface (24) is formed with a first transmission structure (240);
a sensing unit (4) disposed around the crank axle (1) and located adjacent to the first gearwheel (2), wherein the sensing unit (4) is configured to signally connect with the motor (10);
an assisting unit (7) comprising an assisting gearwheel (71) disposed around the crank axle (1), wherein the motor (10) is configured to drive the assisting gearwheel (71) to rotate; and
a chain wheel (8) disposed around the crank axle (1) and connected to the assisting unit (7);
the pedaling sensing device further comprising:
a second gearwheel (3) disposed around the first outer annulus surface (24) of the first gearwheel (2), wherein the second gearwheel (3) comprises a second inner annulus surface (31) disposed around the first outer annulus surface (24), and the second inner annulus surface (31) is formed with a second transmission structure (310) matching the first transmission structure (240), wherein when a force is applied to rotate the crank axle (1), the first gearwheel (2), the second gearwheel (3) and the chain wheel (8) are carried to rotate, the first gearwheel (2) also moves with respect to the crank axle (1) along the axial direction (A) while rotating, such that the sensing unit (4) senses the applied force so as to control the motor (10) to drive the assisting gearwheel (71) to rotate, and the assisting unit (7) transmits an assisting power from the motor (10) to the chain wheel (8) for assisting to rotate the chain wheel (8), wherein the sensing unit (4) comprises a magnet (42) disposed on the first gearwheel (2) and a magnetic sensing element, the magnetic sensing element (43) is disposed adjacent to the crank axle (1) for sensing a magnetic flux variation, and the magnet (42) rotates and moves along the axial direction (A) as the first gearwheel (2) rotates along with the crank axle (1), such that the magnetic sensing element (43) senses the magnetic flux variation so as to sense the applied force, wherein the first gearwheel (2) is located between the magnetic sensing element (43) and the assisting gearwheel (71), wherein the pedaling sensing device further comprises an elastic element (6) disposed around the crank axle (1),
**characterized in that** the first
gearwheel (2) moves toward the assisting gearwheel (71) along the axial direction (A) as the first gearwheel (2) rotates along with the crank axle (1), wherein the elastic element (6) is located between the first gearwheel (2) and the assisting gearwheel (71), and
the elastic element (6) pushes the first gearwheel (2) toward the magnetic sensing element (43).

10. The pedaling sensing device according to claim 9, wherein the assisting unit (7) further comprises a connecting base (72) disposed around the crank axle (1), the connecting base (72) is located between the crank axle (1) and the assisting gearwheel (71) and connected to the chain wheel (8), and the connecting base (72) carries the chain wheel (8) to rotate as the assisting gearwheel (71) rotates.

11. The pedaling sensing device according to claim 10, wherein the assisting unit (7) further comprises a one-way bearing (73) disposed around the connecting base (72), the one-way bearing (73) is located between the connecting base (72) and the assisting gearwheel (71), and the one-way bearing (73) drives the assisting gearwheel (71) to rotate so as to carry the connecting base (72) to rotate in one way.

12. The pedaling sensing device according to claim 9, wherein at least one bearing (33) is disposed adjacent to the second gearwheel (3).

13. The pedaling sensing device according to claim 9, wherein the first transmission structure (240) comprises a plurality of straight teeth (241).

14. The pedaling sensing device according to claim 9, wherein the first transmission structure (240) comprises a plurality of bevel teeth.

15. The pedaling sensing device according to claim 9, wherein the first transmission structure (240) comprises a plurality of wavy teeth.

## Patentansprüche

1. Eine Treterfassungsvorrichtung eines Elektrofahrrads, die dazu konfiguriert ist, eine Signalverbindung mit einem Motor (10) des Elektrofahrrads herzustellen, die folgende Merkmale aufweist:
eine Kurbelachse (1), die sich entlang einer Axialrichtung (A) erstreckt und eine Außenoberfläche (11) aufweist, wobei eine Mehrzahl von ersten Kegelradzähnen (111) um die Außenoberfläche (11) herum angeordnet ist;
ein erstes Getrieberad (2), das um die Außenoberfläche (11) der Kurbelachse (1) herum angeordnet ist und eine erste innere Kreisringoberfläche (23) und eine erste äußere Kreisringoberfläche (24) aufweist, wobei die erste innere Kreisringoberfläche (23) mit einer Mehrzahl von zweiten Kegelradzähnen (231) gebildet ist, die mit den ersten Kegelradzähnen (111) zusammenpassen, und die erste äußere Kreisringoberfläche (24) mit einer ersten Getriebestruktur (240) gebildet ist;
eine Erfassungseinheit (4), die um die Kurbelachse (1) herum angeordnet ist und sich benachbart zu dem ersten Getrieberad (2) befindet, wobei die Erfassungseinheit (4) dazu konfiguriert ist, eine Signalverbindung mit dem Motor (10) herzustellen;
eine Unterstützungseinheit (7), die ein Unterstützungsgetrieberad (71) aufweist, das um die Kurbelachse (1) herum angeordnet ist, wobei der Motor (10) dazu konfiguriert ist, das Unterstützungsgetrieberad (71) anzutreiben, damit sich dasselbe dreht; und
ein Kettenrad (8), das um die Kurbelachse (1) herum angeordnet ist und mit der Unterstützungseinheit (7) verbunden ist;
wobei die Treterfassungsvorrichtung ferner folgende Merkmale aufweist:
ein zweites Getrieberad (3), das um die erste äußere Kreisringoberfläche (24) des ersten Getrieberads (2) herum angeordnet ist, wobei das zweite Getrieberad (3) eine zweite innere Kreisringoberfläche (31) aufweist, die um die erste äußere Kreisringoberfläche (24) herum angeordnet ist, und die zweite innere Kreisringoberfläche (31) mit einer zweiten Getriebestruktur (310) gebildet ist, die mit der ersten Getriebestruktur (240) zusammenpasst; wobei, wenn eine Kraft angelegt wird, um die Kurbelachse (1) zu drehen, das erste Getrieberad (2), das zweite Getrieberad (3) und das Kettenrad (8) zum Drehen gebracht werden, das erste Getrieberad (2) sich während der Drehung auch in Bezug auf die Kurbelachse (1) entlang der Axialrichtung (A) bewegt, so dass die Erfassungseinheit (4) die angelegte Kraft erfasst, um den Motor (10) zu steuern, damit derselbe das Unterstützungsgetrieberad (71) antreibt, damit sich dasselbe dreht, und die Unterstützungseinheit (7) eine Unterstützungsleistung von dem Motor (10) zu dem Kettenrad (8) überträgt zum Unterstützen der Drehung des Kettenrads (8), wobei
die Erfassungseinheit (4) ferner ein Druckerfassungselement (41) aufweist, das um die Kurbelachse (1) herum angeordnet ist, und das erste Getrieberad (2) sich zu dem Druckerfassungselement (41) bewegt, während sich das erste Getrieberad (2) zusammen mit der Kurbelachse (1) dreht, wodurch eine Druckkraft erhöht wird, die an das Druckerfassungselement (41) angelegt wird, so dass die Erfassungseinheit (4) die angelegte Kraft erfasst;
wobei die Treterfassungsvorrichtung ferner ein Axiallager (5) aufweist, das um die Kurbelachse (1) herum angeordnet ist, wobei das Axiallager (5) sich zwischen dem ersten Getrieberad (2) und dem Druckerfassungselement (41) befindet;
wobei die Treterfassungsvorrichtung ferner ein elastisches Element aufweist, das um die Kurbelachse herum angeordnet ist,
**dadurch gekennzeichnet, dass**
das elastische Element sich an einer Seite des ersten Getrieberads (2) entfernt von dem Axiallager (5) befindet und das elastische Element (6) das erste Getrieberad (2) zu dem Axiallager (5) hin drückt.

2. . Die Treterfassungsvorrichtung gemäß Anspruch 1, bei der die Unterstützungseinheit (7) ferner eine Verbindungsbasis (72) aufweist, die um die Kurbelachse (1) herum angeordnet ist, wobei sich die Verbindungsbasis (72) zwischen der Kurbelachse (1) und dem Unterstützungszahnrad (71) befindet und mit dem Kettenrad (8) verbunden ist, und die Verbindungsbasis (72) das Kettenrad (8) zum Drehen bringt, wenn sich das Unterstützungszahnrad (71) dreht.

3. . Die Treterfassungsvorrichtung gemäß Anspruch 2, bei der die Unterstützungseinheit (7) ferner ein Einweglager (73) aufweist, das um die Verbindungsbasis (72) herum angeordnet ist, wobei sich das Einweglager (73) zwischen der Verbindungsbasis (72) und dem Unterstützungszahnrad (71) befindet und das Einweglager (73) das Unterstützungszahnrad (71) antreibt, damit sich dasselbe dreht, um die Verbindungsbasis (72) in einer Richtung zum Drehen zu bringen.

4. . Die Treterfassungsvorrichtung gemäß Anspruch 1, bei der das elastische Element (6) eine Tellerfeder ist.

5. . Die Treterfassungsvorrichtung gemäß Anspruch 1, bei der zumindest ein Lager (33) benachbart zu dem zweiten Getrieberad (3) angeordnet ist.

6. . Die Treterfassungsvorrichtung gemäß Anspruch 1, bei der die erste Getriebestruktur (240) eine Mehrzahl von geraden Zähnen (241) aufweist.

7. . Die Treterfassungsvorrichtung gemäß Anspruch 1, bei der die erste Getriebestruktur (240) eine Mehrzahl von Kegelradzähnen aufweist.

8. . Die Treterfassungsvorrichtung gemäß Anspruch 1, bei der die erste Getriebestruktur (240) eine Mehrzahl von gewellten Zähnen aufweist.

9. . Eine Treterfassungsvorrichtung eines Elektrofahrrads, die dazu konfiguriert ist, eine Signalverbindung mit einem Motor (10) des Elektrofahrrads herzustellen, die folgende Merkmale aufweist:
eine Kurbelachse (1), die sich entlang einer Axialrichtung (A) erstreckt und eine Au-ßenoberfläche (11) aufweist, wobei eine Mehrzahl von ersten Kegelradzähnen (111) um die Außenoberfläche (11) herum angeordnet ist;
ein erstes Getrieberad (2), das um die Außenoberfläche (11) der Kurbelachse (1) herum angeordnet ist und eine erste innere Kreisringoberfläche (23) und eine erste äußere Kreisringoberfläche (24) aufweist, wobei die erste innere Kreisringoberfläche (23) mit einer Mehrzahl von zweiten Kegelradzähnen (231) gebildet ist, die mit den ersten Kegelradzähnen (111) zusammenpassen, und die erste äußere Kreisringoberfläche (24) mit einer ersten Getriebestruktur (240) gebildet ist;
eine Erfassungseinheit (4), die um die Kurbelachse (1) herum angeordnet ist und sich benachbart zu dem ersten Getrieberad (2) befindet, wobei die Erfassungseinheit (4) dazu konfiguriert ist, eine Signalverbindung mit dem Motor (10) herzustellen;
eine Unterstützungseinheit (7), die ein Unterstützungsgetrieberad (71) aufweist, das um die Kurbelachse (1) herum angeordnet ist, wobei der Motor (10) dazu konfiguriert ist, das Unterstützungsgetrieberad (71) anzutreiben, damit sich dasselbe dreht; und
ein Kettenrad (8), das um die Kurbelachse (1) herum angeordnet ist und mit der Unterstützungseinheit (7) verbunden ist;
wobei die Treterfassungsvorrichtung ferner folgende Merkmale aufweist:
ein zweites Getrieberad (3), das um die erste äußere Kreisringoberfläche (24) des ersten Getrieberads (2) herum angeordnet ist, wobei das zweite Getrieberad (3) eine zweite innere Kreisringoberfläche (31) aufweist, die um die erste äußere Kreisringoberfläche (24) herum angeordnet ist, und die zweite innere Kreisringoberfläche (31) mit einer zweiten Getriebestruktur (310) gebildet ist, die mit der ersten Getriebestruktur (240) zusammenpasst, wobei, wenn eine Kraft angelegt wird, um die Kurbelachse (1) zu drehen, das erste Getrieberad (2), das zweite Getrieberad (3) und das Kettenrad (8) zum Drehen gebracht werden, das erste Getrieberad (2) sich während der Drehung auch in Bezug auf die Kurbelachse (1) entlang der Axialrichtung (A) bewegt, so dass die Erfassungseinheit (4) die angelegte Kraft erfasst, um den Motor (10) zu steuern, damit derselbe das Unterstützungsgetrieberad (71) antreibt, damit sich dasselbe dreht, und die Unterstützungseinheit (7) eine Unterstützungsleistung von dem Motor (10) zu dem Kettenrad (8) überträgt zum Unterstützen der Drehung des Kettenrads (8), wobei die Erfassungseinheit (4) einen Magneten (42), der an dem ersten Getrieberad (2) angeordnet ist und ein magnetisches Erfassungselement aufweist, wobei das magnetische Erfassungselement (43) benachbart zu der Kurbelachse (1) angeordnet ist zum Erfassen einer Magnetflussschwankung und der Magnet (42) sich dreht und entlang der Axialrichtung (A) bewegt, wenn sich das erste Getrieberad (2) zusammen mit der Kurbelachse (1) dreht, so dass das magnetische Erfassungselement (43) die Magnetflussschwankung erfasst, um die angelegte Kraft zu erfassen, wobei das erste Getrieberad (2) sich zwischen dem magnetischen Erfassungselement (43) und dem Unterstützungsgetrieberad (41) befindet, wobei die Treterfassungsvorrichtung ferner ein elastisches Element (6) aufweist, das um die Kurbelachse (1) herum angeordnet ist,
**dadurch gekennzeichnet, dass**
das erste Getrieberad (2) sich zu dem Unterstützungsgetrieberad (71) entlang der Axialrichtung (A) bewegt, wenn sich das erste Getrieberad (2) zusammen mit der Kurbelachse (1) bewegt, wobei das elastische Bauglied (6) sich zwischen dem ersten Getrieberad (2) und dem Unterstützungsgetrieberad (71) befindet und
das elastische Element (6) das erste Getrieberad (2) zu dem magnetischen Erfassungselement (43) hin drückt.

10. . Die Treterfassungsvorrichtung gemäß Anspruch 9, bei der die Unterstützungseinheit (7) ferner eine Verbindungsbasis (72) aufweist, die um die Kurbelachse (1) herum angeordnet ist, wobei sich die Verbindungsbasis (72) zwischen der Kurbelachse (1) und dem Unterstützungsgetrieberad (71) befindet und mit dem Kettenrad (8) verbunden ist, und die Verbindungsbasis (72) das Kettenrad (8) zum Drehen bringt, wenn sich das Unterstützungsgetrieberad (71) dreht.

11. . Die Treterfassungsvorrichtung gemäß Anspruch 10, bei der die Unterstützungseinheit (7) ferner ein Einweglager (73) aufweist, das um die Verbindungsbasis (72) herum angeordnet ist, wobei sich das Einweglager (73) zwischen der Verbindungsbasis (72) und dem Unterstützungsgetrieberad (71) befindet und das Einweglager (73) das Unterstützungsgetrieberad (71) antreibt, damit sich dasselbe dreht, um die Verbindungsbasis (72) in einer Richtung zum Drehen zu bringen.

12. . Die Treterfassungsvorrichtung gemäß Anspruch 9, bei der zumindest ein Lager (33) benachbart zu dem zweiten Getrieberad (3) angeordnet ist.

13. . Die Treterfassungsvorrichtung gemäß Anspruch 9, bei der die erste Getriebestruktur (240) eine Mehrzahl von geraden Zähnen (241) aufweist.

14. . Die Treterfassungsvorrichtung gemäß Anspruch 9, bei der die erste Getriebestruktur (240) eine Mehrzahl von Kegelradzähnen aufweist.

15. . Die Treterfassungsvorrichtung gemäß Anspruch 9, bei der die erste Getriebestruktur (240) eine Mehrzahl von gewellten Zähnen aufweist.

## Revendications

1. Dispositif de détection de pédalage d'une bicyclette électrique qui est configuré pour se connecter par un signal à un moteur (10) de la bicyclette électrique, comprenant:
un axe de manivelle (1) s'étendant dans une direction axiale (A) et comprenant une surface extérieure (11), où une pluralité de premières dents en biseau (111) sont disposées autour de la surface extérieure (11);
une première roue d'engrenage (2) disposée autour de la surface extérieure (11) de l'axe de manivelle (1) et comprenant une première surface annulaire intérieure (23) et une première surface annulaire extérieure (24), où la première surface annulaire intérieure (23) est formée avec une pluralité de deuxièmes dents en biseau (231) en correspondance avec les premières dents en biseau (111), et la première surface annulaire extérieure (24) est formée avec une première structure de transmission (240);
une unité de détection (4) disposée autour de l'axe de manivelle (1) et située adjacente à la première roue d'engrenage (2), où l'unité de détection (4) est configurée pour se connecter par un signal au moteur (10);
une unité d'assistance (7) comprenant une roue d'engrenage d'assistance (71) disposée autour de l'axe de manivelle (1), où le moteur (10) est configuré pour entraîner la roue d'engrenage d'assistance (71) en rotation; et
une roue à chaîne (8) disposée autour de l'axe de manivelle (1) et connectée à l'unité d'assistance (7);
le dispositif de détection de pédalage comprenant par ailleurs:
une deuxième roue d'engrenage (3) disposée autour de la première surface annulaire extérieure (24) de la première roue d'engrenage (2), où la deuxième roue d'engrenage (3) comprend une deuxième surface annulaire intérieure (31) disposée autour de la première surface annulaire extérieure (24), et la deuxième surface annulaire intérieure (31) est formée avec une deuxième structure de transmission (310) en correspondance avec la première structure de transmission (240); où, lorsqu'une force est appliquée pour faire tourner l'axe de manivelle (1), la première roue d'engrenage (2), la deuxième roue d'engrenage (3) et la roue à chaîne (8) sont amenées à tourner, la première roue d'engrenage (2) se déplace également par rapport à l'axe de manivelle (1) dans la direction axiale (A) tout en tournant, de sorte que l'unité de détection (4) détecte la force appliquée de manière à commander le moteur (10) pour entraîner la roue d'engrenage d'assistance (71) en rotation, et l'unité d'assistance (7) transmet une énergie d'assistance du moteur (10) à la roue à chaîne (8) pour assister la rotation de la roue à chaîne (8),
dans lequel
l'unité de détection (4) comprend par ailleurs un élément de détection de pression (41) disposé autour de l'axe de manivelle (1), et la première roue d'engrenage (2) se déplace vers l'élément de détection de pression (41) au fur et à mesure que la première roue d'engrenage (2) tourne ensemble avec l'axe de manivelle (1), augmentant ainsi une force de pression appliquée à l'élément de détection de pression (41), de sorte que l'unité de détectión (4) détecte la force appliquée;
le dispositif de détection de pédalage comprenant par ailleurs un palier de butée (5) disposé autour de l'axe de manivelle (1), où le palier de butée (5) est situé entre la première roue d'engrenage (2) et l'élément de détection de pression (41);
le dispositif de détection de pédalage comprenant par ailleurs un élément élastique disposé autour de l'axe de manivelle,
**caractérisé par le fait que** l'élément élastique (6) est situé d'un côté de la première roue d'engrenage (2) éloigné du palier de butée (5), et que l'élément élastique (6) pousse la première roue d'engrenage (2) vers le palier de butée (5).

2. Dispositif de détection de pédalage selon la revendication 1, dans lequel l'unité d'assistance (7) comprend par ailleurs une base de connexion (72) disposée autour de l'axe de manivelle (1), la base de connexion (72) est située entre l'axe de manivelle (1) et la roue d'engrenage d'assistance (71) et connectée à la roue à chaîne (8), et la base de connexion (72) porte la roue à chaîne (8) de manière à tourner au fur et à mesure que tourne la roue d'engrenage d'assistance (71).

3. Dispositif de détection de pédalage selon la revendication 2, dans lequel l'unité d'assistance (7) comprend par ailleurs un roulement unidirectionnel (73) disposé autour de la base de connexion (72), le roulement unidirectionnel (73) est situé entre base de connexion (72) et la roue d'engrenage d'assistance (71), et le roulement unidirectionnel (73) entraîne la roue d'engrenage d'assistance (71) en rotation de manière à amener la base de connexion (72) à tourner dans un sens.

4. Dispositif de détection de pédalage selon la revendication 1, dans lequel l'élément élastique (6) est un ressort à disque.

5. Dispositif de détection de pédalage selon la revendication 1, dans lequel au moins un roulement (33) est disposé adjacent à la deuxième roue d'engrenage (3).

6. Dispositif de détection de pédalage selon la revendication 1, dans lequel la première structure de transmission (240) comprend une pluralité de dents droites (241).

7. Dispositif de détection de pédalage selon la revendication 1, dans lequel la première structure de transmission (240) comprend une pluralité de dents en biseau.

8. Dispositif de détection de pédalage selon la revendication 1, dans lequel la première structure de transmission (240) comprend une pluralité de dents ondulées.

9. Dispositif de détection de pédalage d'une bicyclette électrique, qui est configuré pour se connecter par un signal à un moteur (10) de la bicyclette électrique, comprenant:
un axe de manivelle (1) s'étendant dans une direction axiale (A) et comprenant une surface extérieure (11), où une pluralité de premières dents en biseau (111) sont disposées autour de la surface extérieure (11);
une première roue d'engrenage (2) disposée autour de la surface extérieure (11) de l'axe de manivelle (1) et comprenant une première surface annulaire intérieure (23) et une première surface annulaire extérieure (24), où la première surface annulaire intérieure (23) est formée avec une pluralité de deuxièmes dents en biseau (231) en correspondance avec les premières dents en biseau (111), et la première surface annulaire extérieure (24) est formée avec une première structure de transmission (240);
une unité de détection (4) disposée autour de l'axe de manivelle (1) et située adjacente à la première roue d'engrenage (2), où l'unité de détection (4) est configurée pour se connecter par un signal au moteur (10);
une unité d'assistance (7) comprenant une roue d'engrenage d'assistance (71) disposée autour de l'axe de manivelle (1), où le moteur (10) est configuré pour entraîner la roue d'engrenage d'assistance (71) en rotation; et
une roue à chaîne (8) disposée autour de l'axe de manivelle (1) et connectée à l'unité d'assistance (7);
le dispositif de détection de pédalage comprenant par ailleurs:
une deuxième roue d'engrenage (3) disposée autour de la première surface annulaire extérieure (24) de la première roue d'engrenage (2), où la deuxième roue d'engrenage (3) comprend une deuxième surface annulaire intérieure (31) disposée autour de la première surface annulaire extérieure (24), et la deuxième surface annulaire intérieure (31) est formée avec une deuxième structure de transmission (310) en correspondance avec la première structure de transmission (240), où, lorsqu'une force est appliquée pour faire tourner l'axe de manivelle (1), la première roue d'engrenage (2), la deuxième roue d'engrenage (3) et la roue à chaîne (8) sont amenées à tourner, la première roue d'engrenage (2) se déplace également par rapport à l'axe de manivelle (1) dans la direction axiale (A) tout en tournant, de sorte que l'unité de détection (4) détecte la force appliquée de manière à commander le moteur (10) pour entraîner la roue d'engrenage d'assistance (71) en rotation, et l'unité d'assistance (7) transmet une énergie d'assistance du moteur (10) à la roue à chaîne (8) pour assister la roue à chaîne (8) en rotation, où l'unité de détection (4) comprend un aimant (42) disposé sur la première roue d'engrenage (2) et un élément de détection magnétique, l'élément de détection magnétique (43) est disposé adjacent à l'axe de manivelle (1) pour détecter une variation de flux magnétique, et l'aimant (42) tourne et se déplace dans la direction axiale (A) au fur et à mesure que la première roue d'engrenage (2) tourne ensemble avec l'axe de manivelle (1), de sorte que l'élément de détection magnétique (43) détecte la variation de flux magnétique de manière à détecter la force appliquée, où la première roue d'engrenage (2) est située entre l'élément de détection magnétique (43) et la roue d'engrenage d'assistance (71),
dans lequel le dispositif de détection de pédalage comprend par ailleurs un élément élastique (6) disposé autour de l'axe de manivelle (1),
**caractérisé par le fait que** la première roue d'engrenage (2) se déplace vers la roue d'engrenage d'assistance (71) dans la direction axiale (A) au fur et à mesure que la première roue d'engrenage (2) tourne ensemble avec l'axe de manivelle (1),
dans lequel l'élément élastique (6) est situé entre la première roue d'engrenage (2) et la roue d'engrenage d'assistance (71), et
l'élément élastique (6) pousse la première roue d'engrenage (2) vers l'élément de détection magnétique (43).

10. Dispositif de détection de pédalage selon la revendication 9, dans lequel l'unité d'assistance (7) comprend par ailleurs une base de connexion (72) disposée autour de l'axe de manivelle (1), la base de connexion (72) est située entre l'axe de manivelle (1) et la roue d'engrenage d'assistance (71) et connectée à la roue à chaîne (8), et la base de connexion (72) porte la roue à chaîne (8) en rotation au fur et à mesure que tourne la roue d'engrenage d'assistance (71).

11. Dispositif de détection de pédalage selon la revendication 10, dans lequel l'unité d'assistance (7) comprend par ailleurs un roulement unidirectionnel (73) disposé autour de la base de connexion (72), le roulement unidirectionnel (73) est situé entre la base de connexion (72) et la roue d'engrenage d'assistance (71), et le roulement unidirectionnel (73) entraîne la roue d'engrenage d'assistance (71) en rotation de manière à amener la base de connexion (72) à tourner dans un sens.

12. Dispositif de détection de pédalage selon la revendication 9, dans lequel au moins un roulement (33) est disposé adjacent à la deuxième roue d'engrenage (3).

13. Dispositif de détection de pédalage selon la revendication 9, dans lequel la première structure de transmission (240) comprend une pluralité de dents droites (241).

14. Dispositif de détection de pédalage selon la revendication 9, dans lequel la première structure de transmission (240) comprend une pluralité de dents en biseau.

15. Dispositif de détection de pédalage selon la revendication 9, dans lequel la première structure de transmission (240) comprend une pluralité de dents ondulées.
